# EUROPEAN PATENT SPECIFICATION

(11) **EP 1 215 187 B1**
(45) Date of publication and mention of the grant of the patent: **17.05.2006**
(21) Application number: 01204583.7
(22) Date of filing: 27.11.2001
(51) Int. Cl.: C05F 9/00, C05F 9/02

(54) **A process and system for treating solid city waste**
Verfahren und Vorrichtung zur Behandlung von festen Siedlungsabfällen
Procédé et dispositif pour le traitement de déchets urbains solides

(30) Priority: 15.12.2000 IT TO001161
(43) Date of publication of application: 19.06.2002
(73) Proprietor: VM Press S.r.l., 15076 Ovada (Al) (IT)
(72) Inventor: Gonella, Carlo, 15078 Roccagrimalda (AL) (IT)
(74) Representative: Spandonari, Carlo

(56) References cited:
- EP-A- 0 016 734
- EP-A- 0 359 250
- EP-A- 0 764 620
- EP-A- 0 767 011
- FR-A- 2 441 597
- FR-A- 2 792 570
- FR-E- 43 725
- GB-A- 1 002 550
- US-A- 5 116 760
- US-A- 6 013 177

## Description

This invention is concerned with an extruding press for treating solid city waste (also known as SCW).

As well recognized, solid city waste is a material whose specifications are widely variable, both in its nature (organic or inert) and in its consistence, size and composition, and in any case it has a high degree of humidity. This material is usually disposed of in a dump or incinerator, after being sorted mainly in order to remove metals and large-size pieces, and after reducing its humidity to below 20%.

In order to improve the efficiency and yield of such preliminary treatments, it is known from IT-A-1 255 197, or FR-2 792 570 to squeeze or press the SCW under high pressures in a perforated cylinder, so that the main proportion of its humid contents are wrung out through the holes in the cylinder, and so that, on one hand, a dry, shredded material is obtained, mainly comprising combustible matter such as wood or plastics, and an inert material such as stones, concrete, metals; and, on the other hand, a humid, mainly organic pulp.

While the dry material can be easily disposed of by discharging directly to a dump, or by burning its combustible part, the humid and decomposable part must be submitted to further treatment, in order to prevent it from decomposing in the environment by anaerobic fermentation, with generation of hydrocarbons and other gaseous organic compounds.

Such further treatment has mostly consisted in exposing the material to the open air, while frequently overturning it, in order to ensure that it undergoes a transformation due to aerobic bacteria, thereby being converted to carbon dioxide. However, it cannot be avoided that a proportion of the material also undergoes the above mentioned anaerobic fermentation, and consequently all waste-disposal plants are known to be disliked by the population, being regarded as necessarily associated with unhealthy, or at least unpleasant, emanations.

In order to overcome the drawbacks of open-air fermentation, US-5 116 760 discloses a fermentation enclosure in which controlled air is circulated. In this apparatus, however, organic refuse is fed to and withdrawn from the fermentation vessel by lots, i.e. discontinuously. US-6 013 177 discloses a single-cavity reaction silo for decontaminating sewage sludge, where air is circulated through input and output pipes. The silo is designed for this special material, and is not suitable for handling heterogeneous urban waste.

Other aspects concerning treatment and disposal of refuse of various kinds are discussed in FR-2 441 597, GB-1 002 550, EP-764 520, FR-43 725, but nowhere is disclosed a complete solution to the problem of smoothly handling undiversified urban refuse.

Moreover, the aerobic fermentation of the humid component of city waste is a time-consuming process, which is also influenced by uncontrollable vagaries of the weather: the exposure time of waste to the air in the treatment plant typically is 40 to 50 days. Consequently, large areas are occupied with heaps of waste.

The main object of the invention is therefore to provide a process for treating solid city waste, particularly containing organic materials, which is capable of recycling SCW by a quick and controlled conversion to directly dumpable or usable materials. More particularly, the process should be capable of conducting an aerobic fermentation process, without any uncontrolled diffusion of hydrocarbon gas or of other undesired emanations to the atmosphere.

A further object of the invention is therefore to provide a process which are capable of conducting the above aerobic fermentation process in drastically shorter processign times than required by known techniques, such as times of 10 to 20 days.

Another object of the invention is to provide a process for treating solid city waste, which are capable of mainly delivering as output materials, on one hand, an amendment which can be directly incorporated to the soil, and, on the other hand, a garbage-based fuel which is reasonably free from incombustible materials.

The invention achieves the above and other objects and advantages, such as will appear from the following disclosure, with a process for treating solid city waste, having the features recited in claim 1.

Other advantageous features of the invention are recited in the dependent claims.

The features, aims and advantages of the invention will appear more clearly from the following detailed disclosure, with reference to the attached drawings, given by way of nonlimiting example, and wherein:
Fig. 1 is a block diagram of a system for treating solid city waste according to a preferred embodiment of the invention;
Fig. 2 is a view in cross-section of a preferred extruder press which is part of the system of Fig. 1;
Fig. 3 is a side view in elevation of a preferred embodiment if an organic-material fermentation tower which is a part of the system of Fig. 1;
Fig. 4 is a partial view in cross-section made along lines IV-IV of Fig. 3, to an enlarged scale;
Fig. 5 is a partial view in cross-section made along lines V-V of Fig. 3, to an enlarged scale;
Fig. 6 is a schematic view, in longitudinal cross-section, of an airflow separator which is part of the system of Fig. 1;
Fig. 7 is a detail view in cross-section made along line VII-VII of Fig. 6.

The invention starts from the consideration that the long duration of the fermentation step of the organic mastter sorted out from SCW according to known procedures depends on several factors, including in particular:
- inability to forecast the starting delay of the biochemical fermentation process within the material;
- low efficiency of the stirring and overturning of the material, usually carried out by means of earthmovers;
- strong dependency of the biochemical fermentation processes on the weather conditions (temperature, rain, wind, etc.).

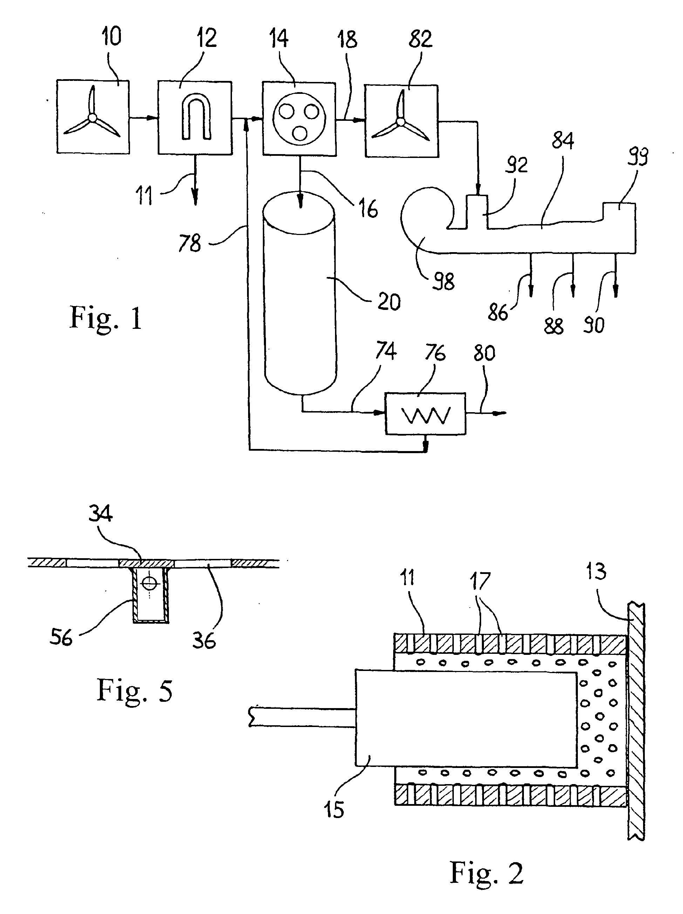

With reference to Fig. 1, the system for treating solid city wast used preferably in the process of the invention comprises a primary chopper 10 for mincing the raw SCW as it arrives to the site after collection from garbage bins and the like. Chopper 10 is a conventional chopper, chosen from known devices for shredding heterogeneous materials, such as a chopper with rotating cutters and with one or two shafts. The output material from chopper 10 is transferred to a magnet-based iron separator 12, known per se. Iron separator 12 separates most ferrous materials, which are conveyed to recycling along a path 11, while the remaining material follows a path 13 to an extruder 14.

Extruder 14 is preferably an extruder press having perforated cylinder dies, of the kind disclosed in IT-A-1 256 197. With reference to Fig. 2, extruder press 14 essentially comprises at least one cylindrical die, having a peripheral wall 11 and an end wall 13 at one end, and which can be filled with waste material by loading means not shown, and a cylindrical punch 15, of a diameter considerably smaller than the diameter of the peripheral wall of the die, and which is drivable by driving means not shown to penetrate into the cylindrical die from the open end to press the material against the peripheral wall and the end wall. Peripheral wall 11 is perforated with small holes 17 over most of its surface. A more detailed disclosure of the constructional details of this type of extruder press can be found in the above mentioned document.

Extruder press 14 therefore subjects SCW to a high pressure in perforated die 11 to extrude the soft, humid component through the holes 17 in the die and thereby to produce a decomposable pulp that is then conveyed to a path 16. The component that has resisted extrusion and has remained in the die is a dry residue, which is expelled from the die and is conveyed along a path 18. Both paths 16 and 18 preferably consist of conveyor belts for transferring the respective materials to the following processing stations.

It should be noted that the predominantly organic extruded pulp is heated by the high compression and by the friction through the die holes, and, moreover, the cellular organic material is heavily mangled, so that cell membranes are broken to a large extent and substances such as protids, aminoacids, etc. are freed.

Although the organic material, due to their large water contents, can be reduced to a semiliquid pulp which can be extruded through very fine holes, say of 2 to 4 mm diameter, it is preferred that the holes in die 11 have an oversized diameter, e.g. 8 mm or, preferably, even 16 mm, so that the holes will also accomodate the passage of solid, non-decomposable fragments such as bits of plastic or chips of wood, small shards of glass or ceramic, and the like, mixed with the organic pulp. It has been found that the incorporation of solid bodies as mentioned above contributes to create air pockets and vents in the humid mass, so that the decomposable material can be oxygenated also in its depth, in contrast to an excessively fine and homogeneous material, in which a compact sludge is liable to form, where anaerobic fermentation tends to prevail over aerobic fermentation, due to lack of oxygenation. In other words, such solid fragments constitute a "structuring" factor, i.e. they lend the substantially amorphous pulp a structure which, together with periodic overturning or stirring, favors full oxygenation allover.

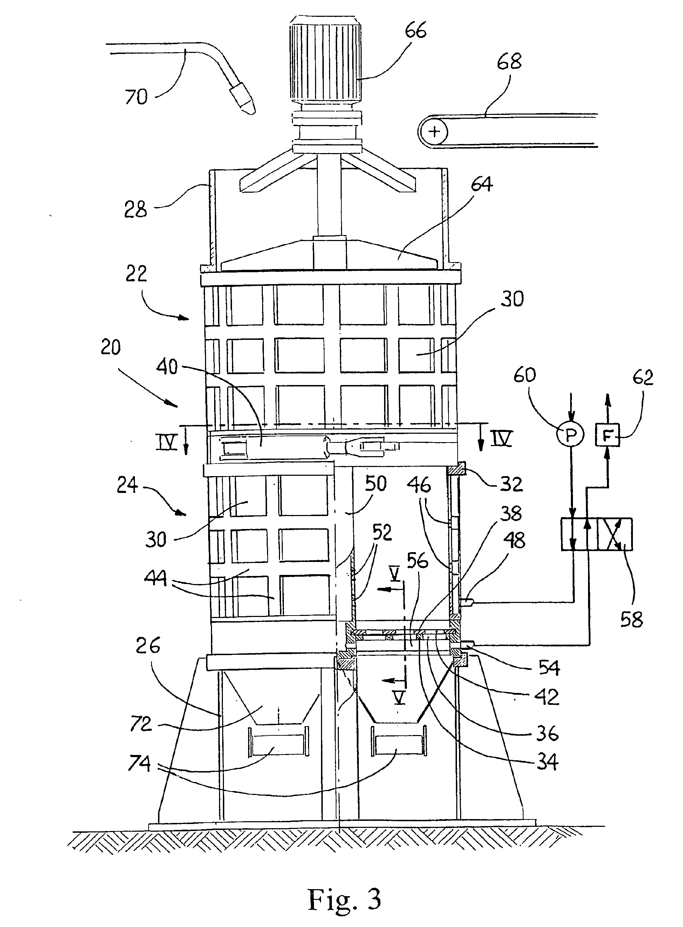

The pulp, incorporating said structuring elements and heated by the extrusion process, is conveyed along path 16 and fed to a continuous fermentator 20, which is described below with reference to Figs. 3 to 5. The fermentator is built as a tower or silo, comprising several, substantially identical, hollow cylindrical modules 22, 24, stacked on one another, supported on a base 26, itself cylindrical, and topped above with a cylindrical hopper 28. Although only two modules 22, 24 are shown on Fig. 3, the modules could be three or more.

Each cylindrical module 22, 24 comprises a preferably metallic, cylindrical shell 30, with an open top in shape of a bell or socket 32 for supporting the module above it, and closed below by a bottom plate 34, perforated with apertures 36 to constitute a grate and supporting a revolving plate 38, which can be driven by a hydraulic cylinder 40 to perform short to-and-fro strokes around the module axis, and having apertures 42 which can align with the apertures of grate 34, so that plate 38, during its to-and-fro stroke, will open and close alternatively the grate apertures, thus acting as a shutter means between the compartments.

Moreover, a network of vertical and peripheral conduits 44, leading to a pipe fitting 48, are attached to shell 30 of each module and communicate with the module interior through apertures such as 46.

Finally, each module 22, 24 has a pipe section 50 along its axis. Pipe section 50 is closed at both ends and is in communication with the module interior through apertures such as 52. The interior of the pipe section communicates with a pipe fitting 54 through a conduit 56 passing under grate 34 (see Fig. 5).

Fittings 48, 54 are connected to respective fittings of two-way, two-position distributor 58, leading on one side to an air pump or compressor 60, adapted to feed the distributor with atmospheric air, on the other side to a conventional cleaning filter 62 exhausting to the atmosphere. Distributor 58 is switchable to deliver air to any one of fittings 48, 54, while returning air from the other fitting to filter 62. Distributor 58 periodically switches the airflow, in order to improve the uniformity of oxygenation of the material contained in the fermentation tower.

Depending on circumstances, the circulation system can be equipped with supplementary members to allow, for instance, the conveyed air to be heated, cooled down or humidified, or to be partially recirculated, or to be enriched with addition of oxygen or other gases which can promote the regularity of the desired fermentation. Such supplementary members are obvious for a person skilled in the art, and are therefore not described herein.

Hopper 28 is equipped with a rotating-paddle agitator 64, driven by a motor 66, and is arranged for receiving the organic pulp from a conveyor belt 68 leading from the extruder press along path 16 of Fig. 1. A nozzle 70 is arranged for sprinkling the material in hopper 28 with water and/or other agents.

Module 22 of the fermentation tower receives the organic pulp from hopper 28, the humidity and chemical characteristics (such as pH) of the pulp being suitably amended by sprinkler 70. The grate of module 22 is kept closed for a predetermined dwelling time, while pump 60 blows air into the module. The air may be modified, for instance it may be enriched with oxygen, or its temperature, humidity or pressure may have been adjusted. The introduction of air may take place through apertures 52 of pipe 50, and its extraction may take place through apertures 46 of external conduits 44, or, preferably, both the introduction and the extraction are made in both directions alternatively, so that the fermenting material is more uniformly permeated.

Periodically, reciprocating plate 38 performs a to-and-fro stroke, stirring the material and causing part of it to drop to the underlying module. The material therefore proceeds from one stage to the next, with an average dwell time in each stage that is controlled, together with other parameters such as oxygenation, temperature, possible additives, etc., such that fermentation in the lowest module is complete and the material is reduced to a powder or stabilized, substantially dry granulate, within which, however, fragments of inert matter such as plastics chips are included.

It has been found that it is possible to carry out the full fermentation cycle within a period of only 10 to 15 days, in contrast to the long times (typically 40 to 50 days) required for fermentation of heaps in the open air. This is due to the physico-chemical conditions of the starting material, i.e. of the organic pulp produced by extruding press 14, having a relatively high temperature caused by the high extrusion energy, and having its cellular membranes broken down to free proteic and other matter, and is also due to the optimum conditions for fermentation that can be created in the fermentation tower by controlling the above mentioned parameters.

Consequently, the material from the lowest module drops, rather than to a further module, to hoppers such as 72, under control of plate 38 associated with the lowest module, and therefrom onto conveyor belts 74, which will transfer the material to a subsequent treating station (see fig. 1) where it is sorted in a conventional sieve to separate and remove any still present unfermented solid fragments, which mainly consist of waterlogged chips of wood or plastics, are preferably led along a path 78 to undergo treatments that are explained below. The remaining material, essentially consisting of a powder of stabilized organic matter, proceeds along a treatment path 80 and can be used directly as a soil amendment.

However, the amount of material handled by tower 20, even if the latter is generously designed, is in general insufficient, in spite of the fermentation speed, to provide a flow that is commercially acceptable for the overall system. Therefore, in the preferred embodiment of the invention, a plurality of identical, side-by-side towers are used, all of which are arranged to deliver the end product onto the same output conveyor belts 74. The starting material is fed from one or more extruder presses 14 via conveyors-elevators which are transferrable from one tower to the next (not shown), as is well known in material handling.

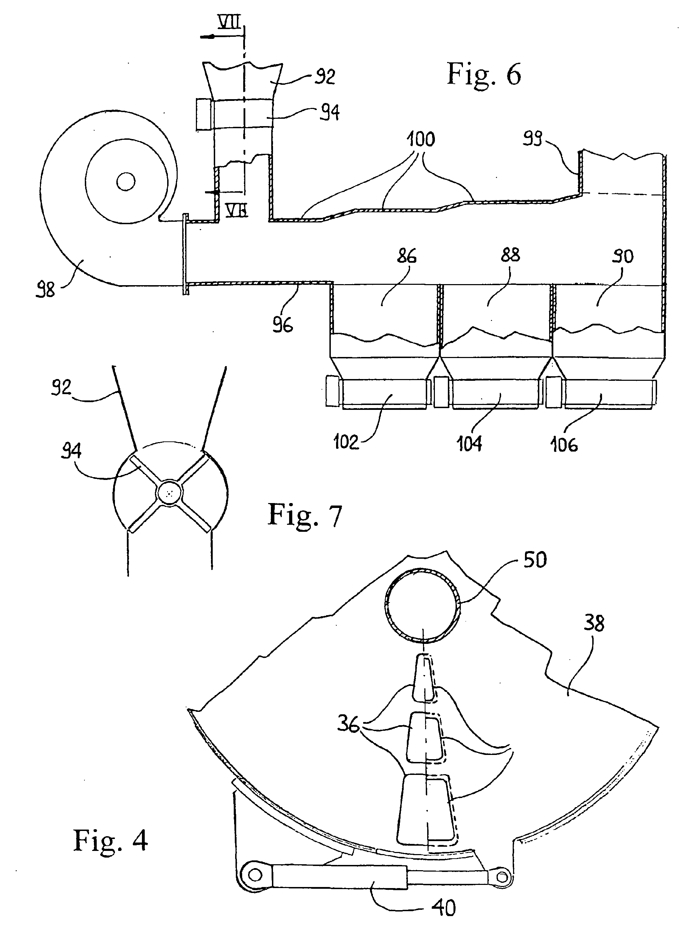

With reference to the dry residue which is produced by the extruding press 14 and is conveyed along path 18, such residue is fed to a secondary chopper 82, similar to chopper 10, where it is further minced, and where, moreover, the lumps formed by the high extrusion pressure are disgregated. After such disgregation, the dry residue is fed to an airflow separator or grader 84, which will subdivide it into three flows of different densities, 86, 88 and 90, respectively, and which is described below with reference to Figs. 6 and 7.

Airflow grader 84 which is preferably used in the process of the invention comprises, a hopper 92, arranged at the end of path 18 of Fig. 1, from which hopper the material falls vertically, via a shutter or downloader 94 with rotating blades, into a horizontal tunnel 96, where a swirling airflow is maintained by a centrifugal fan 98 to be vented through a terminal stack 99. The cross-section of tunnel 96 diverges in three successive steps 100, so that the air speed is decreasing by three successive stages corresponding to the three steps, respectively. Therefore the material, which is initially blown and conveyed in the airstream at maximum speed, will be dragged at different degrees, depending on its density and geometry, so that a heavy, an intermediate and a lightweight fractions will drop out from the airstream into ouput hoppers 86, 88, 90, respectively. The three fractions will then be delivered through respective downloaders 102, 104, 106, similar to downloader 94, and having the same purpose of pneumatically isolating the tunnel with respect to the input and output of materials.

The heavier fraction 86 substantially comprises metals and other inert matter such as pebbles, shards of glass or pottery and similar rubble, and can be sorted in further separators, such as an induction separator and/or other separators known in the art, in order to recover, if desired, recyclable matter such as metals. Such further separators are not illustrated because they are not part of the invention.

Intermediate fraction 88, representing the major proportion and comprising chips of wood, of cardboard, of thick plastics and similar combustible matter, is directly usable as garbage-based fuel, though it can be further purified from harmful matter, above all PVC, which can be separated by known devices.

Finally, lightweight fraction 90 mainly comprises fragments of lightweight plastics, such as bits of polyethylene film, cellulose fibers, etc. Depending on circumstances, this fraction may be further sorted and/or recycled, or it can be mixed to intermediate fraction 86 as a part of garbage-based fuel.

It can be appreciated that the process of the invention is able to treat large amounts of waste material, without exposing any decomposable materials to the atmosphere and without intermediate storage, and to output resulting materials mainly comprising, on the one hand, a stabilized powder which is disposable in an agricultural or forestal environment as a soil amendment, and, on the other hand, fuel material such as garbage-based fuel, beside minor proportions of inert materials, which can be further sorted by conventional techniques. The results achieved by the invention are largely due to the drastic shortening of the fermentation time, provided by extruder press 14 in combination with fermentation tower 20.

## Claims

1. A process for treating solid city waste (SCW) material containing humid organic matter, including the following steps:
- the SCW material is shredded through a chopper (10);
- the shredded SCW material is extruded at high pressure through an extruder die (14) having extrusion holes allowing passage of chips of solid, inorganic matter, in order to produce a substantially organic pulp incorporating said chips while a dry residue is retained in the die;
- said pulp is fermented under stirring in a tower or silo (22, 24, 26) closed to the atmosphere while circulating air through said environment by introducing air into the tower or silo through a first set of apertures and to withdraw air through a second set of apertures, until the pulp is stabilized;
- the fermented pulp is sorted into fragments of inorganic matter and stabilized powder or granulate;
- the fragments of inorganic matter are recirculated to said die (14) together with the SCW material; and
- said dry residue is disaggregated and subdivided into at least two fractions of materials of different weight by floating it in an airstream;
wherein
- the fermentation step is carried out in a silo (22, 24, 26) feedable from above and subdivided into stacked compartments each opening into the next, with shutter means (34-42) between the compartments, which shutter means are opened at intervals to progressively transfer the pulp through successive compartments of the silo; and
- air is fed from air circulation means (60) via air conduits (44) arranged around said silo and an air conduit (50) extending along the axis of said silo to the silo interior through spaced apertures (46,52) in said conduits.

2. The process for treating SCW material of claim 1, **characterized in that** the extrusion of the pulp is made through a die having holes of at least 8 mm diameter and under a pressure of at least 800 bar.

3. The process for treating SCW material of claim 2, **characterized in that** the extrusion of the pulp is made through a die having holes of at least 16 mm diameter.

4. The process for treating SCW material of any of claims 1, 2 or 3, **characterized in that** the air is circulated in said closed environment with periodic inversion of its direction.

5. The process for treating SCW material of any of claims 1 to 4, **characterized in that** the air circulated in the closed environment is temperature-adjusted.

6. The process for treating SCW material of any of claims 1 to 5, **characterized in that** the air circulated in the closed environment is adjusted in humidity.

7. The process for treating SCW material of any of claims 1 to 6, **characterized in that** the air circulated in the closed environment is enriched with oxygen.

8. The process for treating SCW material of any of claims 1 to 7, **characterized in that** the fermenting pulp is supplemented with a fermentation-promoting agent.

9. The process for treating SCW material of any of claims 1 to 8, **characterized in that** the dry residue is subdivided into three fractions of different weight.

10. The process for treating SCW material of any of claims 1 to 8, **characterized in that** the fragments of inorganic material which are separated during said sorting are again subjected to extrusion in said die, together with the SCW material.

11. The process for treating SCW material of any of claims 1 to 10, **characterized in that** the dry residue is disaggregated in a secondary chopper (82) and is subdivided into at least two fractions by passage through an airflow grader (84) comprising a horizontal, diverging tunnel (96) having air blower means (98) at one end and a vent stack (99) at the opposite end, and equipped with an input hopper (92) near one end and with at least two output hoppers (86, 88, 90) arranged at intervals along the tunnel, with pneumatically isolating means (102, 104, 106) associated with the hoppers for allowing passage to the material and preventing the substantial passage of air.

12. The process for treating SCW material of claim 11, **characterized in that** said horizontal tunnel is equipped with three output hoppers spaced along the tunnel.

## Patentansprüche

1. Verfahren zum Behandeln festen Siedlungsabfallmaterials, welches feuchte organische Bestandteile enthält, umfassend die folgenden Schritte:
- das feste Siedlungsabfallmaterial wird durch einen Häcksler (10) geschreddert,
- das geschredderte feste Siedlungsabfallmaterial wird unter hohem Druck durch eine Extruderdüse (14) mit Extrusionslöchern extrudiert, die das Passieren von Schnitzeln fester, anorganischer Bestandteile erlauben, um einen die Schnitzel enthaltenden, im Wesentlichen organischen Brei zu erzeugen, während ein trockener Rückstand in der Düse zurückgehalten wird,
- der Brei wird unter Rühren in einem gegenüber der Atmosphäre abgeschlossenen Turm oder Silo (22, 24, 26) fermentiert, während Luft durch die Umgebung zirkuliert wird, indem Luft durch einen ersten Satz von Öffnungen in den Turm oder das Silo eingeführt und Luft durch einen zweiten Satz von Öffnungen abgezogen wird, bis der Brei stabilisiert ist,
- der fermentierte Brei wird in Fragmente anorganischer Bestandteile und stabilisiertes Pulver oder Granulat sortiert,
- die Fragmente anorganischer Bestandteile werden zusammen mit dem festen Siedlungsabfallmaterial zu der Düse (14) rezirkuliert, und
- der trockene Rückstand wird mittels Flotieren in einem Luftstrom disaggregiert und in wenigstens zwei Materialfraktionen unterschiedlichen Gewichts aufgeteilt, wobei
- der Fermentationsschritt in einem Silo (22, 24, 26) durchgeführt wird, das von oben beschickbar und in gestapelte Abteile, die jeweils in das nächste münden, unterteilt ist, mit Verschlusseinrichtungen (34-42) zwischen den Abteilen, wobei die Verschlusseinrichtungen intervallweise geöffnet werden, um den Brei stufenweise durch aufeinanderfolgende Abteile des Silos zu transportieren, und
- Luft von einer Luftumwälzeinrichtung (60) durch Luftleitungen (44), die um das Silo herum angeordnet sind, und eine Luftleitung (50), die sich entlang der Achse des Silos erstreckt, durch beabstandete Öffnungen (46, 52) in den Leitungen in den Siloinnenraum geführt wird.

2. Verfahren zum Behandeln des festen Siedlungsabfallmaterials nach Anspruch 1,
**dadurch gekennzeichnet, dass** die Extrusion des Breis durch eine Düse, die Löcher mit mindestens 8 mm Durchmesser aufweist, und unter einem Druck von mindestens 800 bar erfolgt.

3. Verfahren zum Behandeln festen Siedlungsabfallmaterials nach Anspruch 2,
**dadurch gekennzeichnet, dass** die Extrusion des Breis durch eine Düse erfolgt, die Löcher mit mindestens 16 mm Durchmesser aufweist.

4. Verfahren zum Behandeln festen Siedlungsabfallmaterials nach einem der Ansprüche 1, 2 oder 3,
**dadurch gekennzeichnet, dass** die Luft in der abgeschlossenen Umgebung mit einer periodischen Umkehr ihrer Richtung zirkuliert wird.

5. Verfahren zum Behandeln festen Siedlungsabfallmaterials nach einem der Ansprüche 1 bis 4,
**dadurch gekennzeichnet, dass** die in der abgeschlossenen Umgebung zirkulierte Luft temperatureingestellt ist.

6. Verfahren zum Behandeln festen Siedlungsabfallmaterials nach einem der Ansprüche 1 bis 5,
**dadurch gekennzeichnet, dass** die in der geschlossenen Umgebung zirkulierte Luft feuchtigkeitseingestellt ist.

7. Verfahren zum Behandeln festen Siedlungsabfallmaterials nach einem der Ansprüche 1 bis 6,
**dadurch gekennzeichnet, dass** die in der geschlossenen Umgebung zirkulierte Luft mit Sauerstoff angereichert ist.

8. Verfahren zum Behandeln festen Siedlungsabfallmaterials nach einem der Ansprüche 1 bis 7,
**dadurch gekennzeichnet, dass** dem fermentierenden Brei ein fermentationsfördemdes Mittel hinzugegeben wird.

9. Verfahren zum Behandeln festen Siedlungsabfallmaterials nach einem der Ansprüche 1 bis 8,
**dadurch gekennzeichnet, dass** der trockene Rückstand in drei Fraktionen unterschiedlichen Gewichts aufgeteilt wird.

10. Verfahren zum Behandeln festen Siedlungsabfallmaterials nach einem der Ansprüche 1 bis 8,
**dadurch gekennzeichnet, dass** die Fragmente anorganischen Materials, die während des Sortierens abgetrennt werden, zusammen mit dem festen Siedlungsabfallmaterial erneut einer Extrusion durch die Düse unterzogen werden.

11. Verfahren zum Behandeln festen Siedlungsabfallmaterials nach einem der Ansprüche 1 bis 10,
**dadurch gekennzeichnet, dass** der trockene Rückstand in einem Hilfshäcksler (82) disaggregiert und durch Passieren eines Luftstromseparators (84) in wenigstens zwei Fraktionen aufgeteilt wird, der einen horizontalen, divergierenden Tunnel (96) mit einer Luftgebläseeinrichtung (98) an einem Ende und einem Entlüftungsschacht (99) am anderen Ende aufweist und mit einem Zuführtrichter (92) nahe einem Ende und mit mindestens zwei Abfuhrtrichtern (86, 88, 90) ausgerüstet ist, die in Abständen längs des Tunnels angeordnet sind, wobei pneumatische Absperreinrichtungen (102, 104, 106) den Trichtern zugeordnet sind, um ein Passieren des Materials zu erlauben und ein wesentliches Passieren von Luft zu verhindern.

12. Verfahren zum Behandeln festen Siedlungsabfallmaterials nach Anspruch 11,
**dadurch gekennzeichnet, dass** der horizontale Tunnel mit drei längs des Tunnels beabstandeten Abfuhrtrichtern versehen ist.

## Revendications

1. Procédé de traitement d'un matériau de déchets urbains solides (DUS) contenant de la matière organique, comportant les étapes suivantes :
- le matériau DUS est déchiqueté dans un hachoir (10) ;
- le matériau DUS déchiqueté est extrudé sous une pression élevée par une filière d'extrudeuse (14) comportant des orifices d'extrusion qui permettent le passage de copeaux de matière inorganique solide, afin de produire une pulpe essentiellement organique incorporant lesdits copeaux tandis qu'un résidu sec est retenu dans la filière ;
- ladite pulpe est fermentée sous agitation dans une tour ou un silo (22, 24, 26) fermé à l'atmosphère tandis que de l'air circule par ledit environnement en introduisant de l'air dans la tour ou le silo par un premier jeu d'ouvertures et en retirant l'air par un second jeu d'ouvertures jusqu'à ce que la pulpe soit stabilisée ;
- la pulpe fermentée est triée en fragments de matière inorganique et de poudre ou granulés stabilisés ;
- les fragments de matière inorganique sont remis en circulation vers ladite filière (14) avec le matériau de DUS ; et
- ledit résidu sec est désagrégé et subdivisé en au moins deux fractions de matériaux de masse différente en les faisant flotter dans un courant d'air ;
dans lequel
- l'étape de fermentation est réalisée dans un silo (22, 24, 26) qui peut être alimenté par le dessus et est subdivisé en compartiments empilés s'ouvrant chacun vers le suivant, des moyens d'obturation (34-42) étant prévus entre les compartiments, lesdits moyens d'obturation étant ouverts à intervalles pour transférer progressivement la pulpe par les compartiments successifs du silo ; et
- de l'air est alimenté depuis un moyen de circulation d'air (60), via des conduites d'air (44) disposées autour dudit silo et un conduit d'air (50) qui s'étend le long de l'axe dudit silo, vers l'intérieur du silo, par des ouvertures espacées (46, 52) dans lesdites conduites.

2. Procédé de traitement de matériau de DUS de la revendication 1, **caractérisé en ce que** l'extrusion de la pulpe est réalisée par une filière ayant des orifices d'au moins 8 mm de diamètre et sous une pression d'au moins 800 bars.

3. Procédé de traitement de matériau de DUS de la revendication 2, **caractérisé en ce que** l'extrusion de la pulpe est réalisée par une filière ayant des orifices d'au moins 16 mm de diamètre.

4. Procédé de traitement de matériau de DUS selon l'une des revendications 1, 2 ou 3, **caractérisé en ce que** l'air est mis en circulation dans ledit environnement clos en inversant périodiquement sa direction.

5. Procédé de traitement de matériau DUS selon l'une des revendications 1 à 4, **caractérisé en ce que** l'air mis en circulation dans l'environnement fermé est régulé en température.

6. Procédé de traitement de matériau DUS selon l'une des revendications 1 à 5, **caractérisé en ce que** l'air mis en circulation dans l'environnement fermé est régulé en humidité.

7. Procédé de traitement de matériau DUS selon l'une des revendications 1 à 6, **caractérisé en ce que** l'air mis en circulation dans l'environnement fermé est enrichi en oxygène.

8. Procédé de traitement de matériau DUS selon l'une des revendications 1 à 7, **caractérisé en ce que** la pulpe en fermentation est complétée par un agent favorisant la fermentation.

9. Procédé de traitement de matériau DUS selon l'une des revendications 1 à 8, **caractérisé en ce que** le résidu sec est subdivisé en trois fractions de masses différentes.

10. Procédé de traitement de matériau DUS selon l'une des revendications 1 à 8, **caractérisé en ce que** les fragments de matière inorganique sont séparés pendant ledit tri et sont à nouveau soumis à une extrusion dans ladite filière avec le matériau de DUS.

11. Procédé de traitement de matériau de DUS selon l'une des revendications 1 à 10, **caractérisé en ce que** le résidu sec est désagrégé dans un hachoir secondaire (82) et est subdivisé en au moins deux fractions par passage par un trieur à écoulement d'air (84) qui comprend un tunnel divergent horizontal (96) équipé de moyens à soufflerie d'air (98) à une extrémité et d'une colonne d'évent (99) à l'extrémité opposée, et équipé d'une trémie d'alimentation (92) près d'une extrémité et d'au moins deux trémies de sortie (86, 88, 90) disposées à intervalles le long du tunnel, des moyens à isolation pneumatique (102, 104, 106) étant associés aux trémies pour permettre le passage du matériau et éviter le passage substantiel d'air.

12. Procédé de traitement de matériau de DUS selon la revendication 11, **caractérisé en ce que** ledit tunnel horizontal est équipé de trois trémies de sortie espacées le long du tunnel.
